# EUROPEAN PATENT SPECIFICATION

(11) **EP 2 210 927 B1**
(45) Date of publication and mention of the grant of the patent: **14.12.2016**
(21) Application number: 08800737.2
(22) Date of filing: 01.09.2008
(51) Int. Cl.: C09J 163/00, C09J 179/00, C09J 11/00

(54) **A RED AND GREEN DRY ADHESIVE, A METHOD PRODUCING THE SAME**
ROTGRÜNER TROCKENKLEBSTOFF UND HERSTELLUNGSVERFAHREN DAFÜR
ADHÉSIF SEC ROUGE ET VERT ET SON PROCÉDÉ DE FABRICATION

(30) Priority: 08.11.2007 CN 200710053792
(43) Date of publication of application: 28.07.2010
(73) Proprietor: Wuhan Keda Marble Protective Materials CO., LTD., Hubei 430040 (CN)
(72) Inventor: SUN, Danjiu, Wuhan Hubei 430040 (CN); WU, Shuangfeng, Wuhan Hubei 430040 (CN); XIANG, Yingfan, Wuhan Hubei 430040 (CN); DU, Kunwen, Wuhan Hubei 430040 (CN)
(74) Representative: Zeuner Summerer Stütz
(86) International application number: PCT/CN2008/072225
(87) International publication number: WO 2009/059511

(56) References cited:
- EP-A1- 0 342 965
- EP-A2- 0 438 725
- EP-A2- 1 176 322
- WO-A1-2005/030853
- CN-A- 1 037 726
- CN-A- 1 046 546
- CN-A- 1 334 397
- CN-A- 101 157 836
- US-A- 3 773 706
- US-A- 4 069 191
- US-A- 4 164 492
- US-A- 6 017 983

## Description

### FIELD OF THE INVENTION

The present invention relates to a red and green dry adhesive for bonding stone materials, and also relates to a method for producing the red and green dry adhesive.

### BACKGROUND OF the INVENTION

With the improvement of living standards, the housing conditions required by people are higher and higher. Using stone materials as decorative materials on exterior walls, which can give people a feel that return to nature and create a nobler and elegant artistic effect, is realized and accepted by the society. Especially, the invention and application of a dry hanging technology on external walls of large buildings provides a good market prospect for stone dry adhesive. Since a conventional fluid gluing technology with cement has an bad effect on the quality and effect of stone wet fastened due to the quality of the cement, that may result in a series of stone diseases such as water stain, rust, whiskering, whitening and so on. Further, a difference between an expansion coefficient of cement and that of stone will engender stress cracks in the bonding layer and, in turn, affect the stone curtain wall's safety. Dry adhesives having properties of good bonding strength and weather resistance is more and more widely applied into the dry hanging technology of curtain walls.

The existing construction technologies of stone dry adhesive includes stainless steel pendants anchoring method, direct bonding method, steel frame bonding method, transition bonding method and anchoring transition bonding method. Now building stones in the house are generally mounted lower than 9m, and the main construction technology is direct bonding method or stainless steel pendants anchoring method. Since different construction technologies of prior dry adhesive have great difference in their systems and requirements of intrinsic performance, the inventor take a direct bonding dry adhesive whose construction technology is easy and has high efficiency as an individual variety, namely a dry adhesive of the present invention, to develop and research. The inventor researches the requirement of the construction technology to produce a product suitable for the technology. The dry adhesive of the present invention has properties of high strength and good weather resistance compared with traditional dry adhesives, which only require strength, and the strength is low.

In addition, stone belongs to porous material. As component A and component B of dry adhesives in the market has little difference in their colors, mixing proportion is difficult to be judged by eyes and stirring is uneven, which results in imperfect cure and, in turn, oil permeability occurs. If the imperfect curing composition infiltrates into the stone, a surface of the stone will become dim, which is hard to clean and remove, and thus, the stone loses its original luster, which results in pollution or imperfection of the stone.

### SUMMARY OF THE INVENTION

In order to overcome disadvantages of low strength, poor weather resistance and inconvenient execution of prior dry adhesives used for direct bonding, an objective of the present invention is to provide a red and green dry adhesive using for direct bonding process, which has properties of high strength, good weather resistance and convenient execution.

Another objective of the present invention is to provide a method for producing the red and green dry adhesive.

To achieve the above mentioned objectives, the present invention provides a red and green dry adhesive comprising component A and component B. The component A which is red comprises 20-30 parts epoxy resin, 0-3 parts coupling agent, 1-5 parts reactive diluents, 20-60 parts inorganic filler, 0.1-1 parts red organic color paste (may be acidic, alkaline or neutral), while component B which is green comprises 5-15 parts organic modified amine hardener, 3-5 parts coupling agent, 15-50 parts inorganic filler, 3-10 parts promoter, 0-5 parts thickener, 0-5 parts reactive diluents, 0.1-2 parts green organic color paste. The component A and the component B become white after mixing.

In an embodiment of the red and green dry adhesive of the present invention, the red organic color paste comprises one or more of Lithol scarlet, pigment scarlet powder, Toluidine Red, and lightfast red. A green pigment used in the green organic color paste is a mixture of one or more of Benzimidazolone azo yellow, isoindolinone yellow, medium chrome yellow, and Aniline Yellow with one or more of Fluorescence blue and/or phthalocyanine blue.

In another embodiment of the red and green dry adhesive of the present invention, the epoxy resin includes Bisphenol A Type glycidol ether, Bisphenol F Type glycidol ether, Propenyl glycidol ether, propylene oxide tert-butyl ether, hexanediol glycidol ether, and polyglycidyl ether.

In still another embodiment of the red and green dry adhesive of the present invention, the organic modified amine hardener includes one or more of low molecular polyamide, Phenalkamines, aliphatic amine, aliphatic cyclic amine, and aromatic amine.

In still another embodiment of the red and green dry adhesive of the present invention, the inorganic filler includes one or more of calcium carbonate, fine silicon powder, barium sulfate, alumina, magnesia, talcum powder, white carbon black, bentonite, and titanium pigment.

In still another embodiment of the red and green dry adhesive of the present invention, the coupling agent includes one or more of vinyl silane, γ - Propyltrimethoxysilane, aminopropyltriethoxysilane, and anilinomethyltriethoxysliane.

In another embodiment of the red and green dry adhesive of the present invention, the promoter includes one or more of 2, 4, 6-Tri(dimethylamino)phenol, N,N-Dimethyl benzyl amine, N,N-Dimethyl aniline and β-hydroxyethyl diamine.

In another embodiment of the red and green dry adhesive of the present invention, the thickener is Hydroxyethyl Cellulose.

A method for producing the red and green dry adhesive which includes component A and component B, in which the component A includes 20-30 parts epoxy resin (network skeleton), 0-3 parts coupling agent, 1-5 parts reactive diluents, 20-60 parts inorganic filler (for enhancement), 0.1-1 parts red organic color paste.

The method for producing the component A comprises: under room temperature and atmospheric pressure, adding 0-3 parts coupling agent into a mixed solution of 1-5 parts reactive diluents and mixing them homogeneously; then mixing homogeneously with 20-30 parts epoxy resin at a dispersion speed of 50-100 rounds per minute; adding 20-60 parts inorganic filler, and 0.1-1 parts red organic color paste in sequence and dispersing for 40 minutes; finally, after milled by three rolls, pink component A is obtained.

The component B includes 5-15 parts organic modified amine hardener, 3-5 parts coupling agent, 15-50 parts inorganic filler (for enhancement), 3-10 parts promoter, 0-5 parts thickener, 0-5 parts reactive diluents, 0.1-2 parts green organic color paste. The component A and the component B become white after mixing.

The method for producing the component B comprises steps as follow. Under room temperature and atmospheric pressure, adding 3-5 parts coupling agent into a mixed solution of 5-15 parts organic modified amine hardener, 0-5 parts reactive diluents, and 3-10 parts promoter and mixing homogeneously, and then adding 15-50 parts inorganic filler, 0-5 parts thickener, and 0.1-2 parts green organic color paste and stir them for 40 minutes such that the component B is obtained.

The present invention has following advantages. The dry adhesive of the present invention has good bonding performance and weather resistance, the resin therein does not flow out or shrink, its execution is convenient and quickly, it can locate accurately, and accurately judge a homogenization degree of stirring so as to improve the construction quality.

Meanwhile, the dry adhesive of the present invention has an obvious color difference and becomes white after being mixed homogenously, so it provides a standard judgment basis for effectively controlling mixing proportion and, in turn, it is convenient for the field work, can avoid an error resulted by human judgment, guarantee the construction quality, easily and effectively reduce the chance of stone pollution, and improve the performances of the present red and green dry adhesive such that the construction quality is improved.

The following table illustrates physical and mechanical properties of the present invention compared with relating national technical standards.
(in which aging property denotes a heat treatment aging property in mechanical test)

| No. | Item | | | Technical index | Test data |
|---|---|---|---|---|---|
| 1 | Pot life, min | | | >30-90 | 45 |
| 2 | flexural modulus, MPa | | | ≥ 2000 | 3355.0 |
| 3 | Impact strength, KJ/m² | | | ≥3.0 | 3.68 |
| 4 | tensile-shear strength (stainless steel-stainless steel), MPa | | | ≥8.0 | 15.6 |
| 5 | Compression shear strength | Stone-stone | Standard condition 48h Soaking, 168h Heat treatment 80°C, 168h freeze-thaw cycles 50 times | ≥10.0 | 13.0 |
| | | | | ≥7.0 | 11.8 |
| | | | | ≥7.0 | 17.1 |
| | | | | ≥7.0 | 12.6 |

The standards include JC 887-2001"epoxy adhesive for dry hanging stone curtain wall". Test of pot life is in accordance with 5.6 of GB/T 12954-1991.

Test of flexural modulus in accordance with GB/T 2570.

Impact strength is tested according to GB/T 2571 using small specimens without notch to mould.

Tensile-shear strength is tested according to GB/T 7124, the test result is an average value of five specimens.

Compression shear strength is tested according to 6.3.4 of JC/T 547-1994.

It can be known from the above table that the properties of the red and green dry adhesive are better than the national standards.

### DETAILED DESCRIPTION OF ILLUSTRATED EMBODIMENTS

### Embodiment 1

A red and green dry adhesive includes component A and component B. The component A includes 20 parts epoxy resin, 1 parts reactive diluents, 20 parts inorganic filler, and 0.1 parts Lithol scarlet (red organic color paste). The component B includes 5 parts organic modified amine hardener, 3 parts coupling agent, 15 parts inorganic filler, 3 parts promoter, 0.1 parts mixture of Benzimidazolone azo yellow and Fluorescence blue (green organic color paste).

The epoxy resin is Bisphenol A Type glycidol ether and Bisphenol F Type glycidol ether, the organic modified amine hardener, which is bought from the market is a mixture of low molecular polyamide and Phenalkamines, the inorganic filler is a mixture of calcium carbonate and fine silicon powder, the coupling agent is a mixture of vinyl silane and γ-Propyltrimethoxysilane, the promoter is a mixture of 2, 4, 6-Tri(dimethylamino)phenol, N,N-Dimethyl benzyl amine, and the thickener is Hydroxyethyl Cellulose.

A method for producing the red and green dry adhesive includes producing component A and producing component B.

The method for producing the component A includes: under room temperature and atmospheric pressure, adding epoxy resin, inorganic filler, red organic color paste in sequence at a dispersion speed of 50-100 rounds per minute for 40 minutes (it should be dispersive mixing for a period which can be extended or shortened); after milled by three rolls, pink component A is obtained.

The method for producing the component B includes: under room temperature and atmospheric pressure, adding coupling agent into a mixed solution of organic modified amine hardener and promoter and mixing homogeneously, and then adding inorganic filler and green organic color paste and stir them for 40 minutes (it should be dispersive mixing for a period which can be extended or shortened) such that the component B is obtained.

### Embodiment 2

A red and green dry adhesive includes component A and component B. The component A includes 30 parts epoxy resin, 3 parts coupling agent, 5 parts reactive diluents, 60 parts inorganic filler, and 1 parts red organic color paste. The component B includes 15 parts organic modified amine hardener, 5 parts coupling agent, 50 parts inorganic filler, 10 parts promoter, 5 parts thickener, 5 parts reactive diluents, and 2 parts green organic color paste.

The red organic color paste includes Lithol scarlet, pigment scarlet powder, Toluidine Red, and lightfast red. The green pigment used in the green organic color paste is a mixture of Benzimidazolone azo yellow, isoindolinone yellow, medium chrome yellow, and Aniline Yellow with Fluorescence blue and phthalocyanine blue. The epoxy resin includes Bisphenol A Type glycidol ether, Bisphenol F Type glycidol ether, Propenyl glycidol ether, propylene oxide tert-butyl ether, hexanediol glycidol ether, and polyglycidyl ether. The organic modified amine hardener includes low molecular polyamide, Phenalkamines, aliphatic amine, aliphatic cyclic amine, and aromatic amine. The inorganic filler includes calcium carbonate, fine silicon powder, barium sulfate, alumina, magnesia, talcum powder, white carbon black, bentonite, and titanium pigment. The coupling agent includes one or more of vinyl silane, γ -Propyltrimethoxysilane, γ -aminopropyltriethoxysilane, and anilinomethyltriethoxysliane. The promoter includes one or more of 2, 4, 6- Tri(dimethylamino)phenol, N,N-Dimethyl benzyl amine, N,N-Dimethyl aniline and β-hydroxyethyl diamine. And the thickener is Hydroxyethyl Cellulose.

A method for producing the red and green dry adhesive includes producing component A and producing component B.

The method for producing the component A includes: under room temperature and atmospheric pressure, adding coupling agent into mixed solution of reactive diluents and mixing them homogeneously; then mixing homogeneously with 20 parts epoxy resin at a dispersion speed of 50-100 rounds per minute; adding inorganic filler and red organic color paste in sequence and dispersing for 40 minutes; finally, after milled by three rolls, pink component A is obtained.

The method for producing the component B includes: under room temperature and atmospheric pressure, adding coupling agent into a mixed solution of organic modified amine hardener, reactive diluents, and promoter and mixing homogeneously, and then adding inorganic filler, thickener, and green organic color paste and stir them for 40 minutes such that the component B is obtained.

### Embodiment 3

A red and green dry adhesive includes component A and component B. The component A includes 25 parts epoxy resin, 1.5 parts coupling agent, 3 parts reactive diluents, 40 parts inorganic filler, and 0.5 parts red organic color paste. The component B includes 10 parts organic modified amine hardener, 4 parts coupling agent, 30 parts inorganic filler, 6 parts promoter, 2 parts thickener, 2 parts reactive diluents, and 1 parts green organic color paste.

The red organic color paste includes Toluidine Red and lightfast red. The green pigment used in the green organic color paste is a mixture of Aniline Yellow and phthalocyanine blue. The epoxy resin includes hexanediol glycidol ether, and polyglycidyl ether. The organic modified amine hardener includes aliphatic cyclic amine, and aromatic amine. The inorganic filler includes talcum powder, white carbon black, and titanium pigment. The coupling agent includes γ-aminopropyltriethoxysilane, and anilinomethyltriethoxysliane. The promoter includes N,N-Dimethyl benzyl amine, and hydroxyethyl diamine. And the thickener is Hydroxyethyl Cellulose.

The method for producing the red and green dry adhesive is the same as the method of embodiment 2.

### Embodiment 4

A red and green dry adhesive includes component A and component B. The component A includes 28 parts epoxy resin, 2 parts coupling agent, 4 parts reactive diluents, 50 parts inorganic filler, and 0.6 parts red organic color paste. The component B includes 8 parts organic modified amine hardener, 5 parts coupling agent, 25 parts inorganic filler, 5 parts promoter, 4 parts reactive diluents, and 1.5 parts green organic color paste.

The red organic color paste includes pigment scarlet powder. The green pigment used in the green organic color paste is a mixture of isoindolinone yellow, medium chrome yellow with Fluorescence blue. The epoxy resin includes Bisphenol F Type glycidol ether, and Propenyl glycidol ether. The organic modified amine hardener includes aliphatic amine and aromatic amine. The inorganic filler includes alumina, magnesia, and talcum powder. The coupling agent includes γ -Propyltrimethoxysilane and γ -aminopropyltriethoxysilane. The promoter is N,N-Dimethyl benzyl amine.

There is no thickener in component B in the producing method, and the other is the same as embodiment 2.

### Embodiment 5

A red and green dry adhesive includes component A and component B. The component A includes 22 parts epoxy resin, 0.5 parts coupling agent, 3 parts reactive diluents, 50 parts inorganic filler, and 0.7 parts red organic color paste. The component B includes 12 parts organic modified amine hardener, 5 parts coupling agent, 40 parts inorganic filler, 9 parts promoter, 4 parts thickener, and 1.1 parts green organic color paste.

The red organic color paste includes Toluidine Red and lightfast red. The green pigment used in the green organic color paste is a mixture of Benzimidazolone azo yellow, and medium chrome yellow with Fluorescence blue and phthalocyanine blue.

The epoxy resin includes Bisphenol F Type glycidol ether, propylene oxide tert-butyl ether, and hexanediol glycidol ether. The organic modified amine hardener is aliphatic amine. The inorganic filler includes calcium carbonate, barium sulfate, magnesia, and talcum powder. The coupling agent includesvinyl silane and anilinomethyltriethoxysliane. The promoter includes N,N-Dimethyl aniline and β-hydroxyethyl diamine. And the thickener is Hydroxyethyl Cellulose.

There is no reactive diluent in component B in the producing method, and the other is the same as the producing method of embodiment 2.

### Embodiment 6

A red and green dry adhesive includes component A and component B. The component A includes 29 parts epoxy resin (network skeleton), 1 parts coupling agent, 5 parts reactive diluents, 20 parts inorganic filler (for enhancement), and 0.1 parts red organic color paste. The component B includes 5 parts organic modified amine hardener, 3 parts coupling agent, 15 parts inorganic filler, 3 parts promoter, 2 parts thickener, 4 parts reactive diluents, and 0.1 parts green organic color paste.

The red organic color paste is lightfast red. The green pigment used in the green organic color paste is a mixture of medium chrome yellow with Fluorescence blue. The epoxy resin includespropylene oxide tert-butyl ether and polyglycidyl ether. The organic modified amine hardener includes Phenalkamines and aliphatic cyclic amine. The inorganic filler includes calcium carbonate, fine silicon powder, talcum powder, and white carbon black. The coupling agent is γ-Propyltrimethoxysilane, the promoter is N,N-Dimethyl benzyl amine. And the thickener is Hydroxyethyl Cellulose.

The method for producing the red and green dry adhesive is the same as the method of embodiment 2.

It should be noted that the invention is not to be limited to the disclosed embodiments, but on the contrary, is intended to cover various modifications and equivalent arrangements included within the spirit and scope of the invention.

## Claims

1. A red and green dry adhesive including component A and component B, wherein the component A which is red comprises 20-30 parts epoxy resin, 0-3 parts coupling agent, 1-5 parts reactive diluents, 20-60 parts inorganic filler, 0.1-1 parts red organic color paste, while the component B which is green comprises 5-15 parts organic modified amine hardener, 3-5 parts coupling agent, 15-50 parts inorganic filler, 3-10 parts promoter, 0-5 parts thickener, 0-5 parts reactive diluents, and 0.1-2 parts green organic color paste, the component A and the component B become white after mixing.

2. The red and green dry adhesive as claimed in claim 1, wherein the red organic color paste comprises one or more of Lithol scarlet, pigment scarlet powder, Toluidine Red, and lightfast red, and a green pigment used in the green organic color paste is a mixture of one or more of Benzimidazolone azo yellow, isoindolinone yellow, medium chrome yellow, and Aniline Yellow with one or more of Fluorescence blue and/or phthalocyanine blue.

3. The red and green dry adhesive as claimed in claim 1, wherein the epoxy resin includes Bisphenol A Type glycidol ether, Bisphenol F Type glycidol ether, Propenyl glycidol ether, propylene oxide tert-butyl ether, hexanediol glycidol ether, and polyglycidyl ether.

4. The red and green dry adhesive as claimed in claim 1, wherein the organic modified amine hardener comprises one or more of low molecular polyamide, Phenalkamines, aliphatic amine, aliphatic cyclic amine, and aromatic amine.

5. The red and green dry adhesive as claimed in claim 1, wherein the inorganic filler comprises one or more of calcium carbonate, fine silicon powder, barium sulfate, alumina, magnesia, talcum powder, white carbon black, bentonite, and titanium pigment.

6. The red and green dry adhesive as claimed in claim 1, wherein the coupling agent comprises one or more of vinyl silane, γ - Propyltrimethoxysilane, aminopropyltriethoxysilane, and anilinomethyltriethoxysliane.

7. The red and green dry adhesive as claimed in claim 1, wherein the promoter comprises one or more of 2, 4, 6- Tri(dimethylamino)phenol, N,N-Dimethyl benzyl amine, N,N-Dimethyl aniline and β -hydroxyethyl diamine.

8. The red and green dry adhesive as claimed in claim 1, wherein the thickener is Hydroxyethyl Cellulose.

9. A method for producing a red and green dry adhesive including red component A and green component B, comprising:
method for producing the component A which comprises 20-30 parts epoxy resin, 0-3 parts coupling agent, 1-5 parts reactive diluents, 20-60 parts inorganic filler, 0.1-1 parts red organic color paste, comprising:
under room temperature and atmospheric pressure, adding 0-3 parts coupling agent into a mixed solution of 1-5 parts reactive diluents and mixing them homogeneously; then mixing homogeneously with 20-30 parts epoxy resin at a dispersion speed of 50-100 rounds per minute; adding 20-60 parts inorganic filler, and 0.1-1 parts red organic color paste in sequence and dispersing for 40 minutes; finally, after milled by three rolls, pink component A is obtained; and
method for producing the component B which comprises 5-15 parts organic modified amine hardener, 3-5 parts coupling agent, 15-50 parts inorganic filler, 3-10 parts promoter, 0-5 parts thickener, 0-5 parts reactive diluents, and 0.1-2 parts green organic color paste, comprising under room temperature and atmospheric pressure, adding 3-5 parts coupling agent into a mixed solution of 5-15 parts organic modified amine hardener, 0-5 parts reactive diluents, and 3-10 parts promoter and mixing homogeneously, and then adding 15-50 parts inorganic filler, 0-5 parts thickener, and 0.1-2 parts green organic color paste and stir them for 40 minutes such that the component B is obtained;
the component A and the component B becoming white after mixing.

## Patentansprüche

1. Roter und grüner Trockenklebstoff, welcher eine Komponente A und eine Komponente B enthält, wobei die Komponente A, die rot ist, 20 bis 30 Teile Epoxidharz, 0 bis 3 Teile Haftvermittler, 1 bis 5 Teile reaktive Verdünnungsmittel, 20 bis 60 Teile anorganischen Füllstoff, 0,1 bis 1 Teil rote organische Farbpaste umfasst, während die Komponente B, die grün ist, 5 bis 15 Teile organischen modifizierten Aminhärter, 3 bis 5 Teile Haftvermittler, 15 bis 50 Teile anorganischen Füllstoff, 3 bis 10 Teile Promoter, 0 bis 5 Teile Verdickungsmittel, 0 bis 5 Teile reaktive Verdünnungsmittel und 0,1 bis 2 Teile grüne organische Farbpaste umfasst, wobei die Komponente A und die Komponente B nach dem Mischen weiß werden.

2. Roter und grüner Trockenklebstoff nach Anspruch 1, wobei die rote organische Farbpaste eines oder mehrere von Lithol-Scharlach, Pigmentscharlachpulver, Toluidinrot und lichtechtes Rot umfasst und ein grünes Pigment, das in der grünen organischen Farbpaste verwendet ist, ein Gemisch eines oder mehrerer von Benzimidazolon-Azogelb, Isoindolinon-Gelb, Chromgelb und Anilingelb mit einem oder mehreren von Fluoreszenzblau und/oder Phthalocyaninblau ist.

3. Roter und grüner Trockenklebstoff nach Anspruch 1, wobei das Epoxidharz Glycidolether vom Bisphenol-A-Typ, Glycidolether vom Bisphenol-F-Typ, Propenylglycidolether, Propylenoxid-tert-butylether, Hexandiolglycidolether und Polyglycidylether enthält.

4. Roter und grüner Trockenklebstoff nach Anspruch 1, wobei der organische modifizierte Aminhärter eines oder mehrere von niedermolekularem Polyamid, Phenalkaminen, aliphatischem Amin, aliphatischcyclischem Amin und aromatischem Amin umfasst.

5. Roter und grüner Trockenklebstoff nach Anspruch 1, wobei der anorganische Füllstoff eines öder mehrere von Calciumcarbonat, feinem Siliciumpulver, Bariumsulfat, Aluminiumoxid, Magnesiumoxid, Talkumpulver, weißem Ruß, Bentonit und Titanpigment umfasst.

6. Roter und grüner Trockenklebstoff nach Anspruch 1, wobei der Haftvermittler eines oder mehrere von Vinylsilan, γ-Propyltrimethoxysilan, Aminopropyltriethoxysilan und Anilinomethyltriethoxysilan umfasst.

7. Roter und grüner Trockenklebstoff nach Anspruch 1, wobei der Promoter eines oder mehrere von 2,4,6-Tri(dimethylamino)phenol, N,N-Dimethylbenzylamin, N,N-Dimethylanilin und β-Hydroxyethyldiamin umfasst.

8. Roter und grüner Trockenklebstoff nach Anspruch 1, wobei das Verdickungsmittel Hydroxyethylcellulose ist.

9. Verfahren zum Herstellen eines roten und grünen Trockenklebstoffs, der eine rote Komponente A und eine grüne Komponente B enthält, umfassend:
Verfahren zum Herstellen der Komponente A, die 20 bis 30 Teile Epoxidharz, 0 bis 3 Teile Haftvermittler, 1 bis 5 Teile reaktive Verdünnungsmittel, 20 bis 60 Teile anorganischen Füllstoff, 0,1 bis 1 Teil rote organische Farbpaste umfasst, umfassend:
unter Zimmertemperatur und Atmosphärendruck Zugeben von 0 bis 3 Teilen Haftvermittler in eine gemischte Lösung von 1 bis 5 Teilen reaktiven Verdickungsmitteln und deren Mischen zur Homogenität; anschließend Mischen zur Homogenität mit 20 bis 30 Teilen Epoxidharz bei einer Dispergierungsgeschwindigkeit von 50 bis 100 Umdrehungen pro Minute; Zugeben von nacheinander 20 bis 60 Teilen anorganischem Füllstoff und 0,1 bis 1 Teil roter organischer Farbpaste und Dispergieren für 40 Minuten; abschließend wird nach dem Mahlen mittels dreier Walzen die rosafarbene Komponente A erhalten;
und
Verfahren zum Herstellen der Komponente B, die 5 bis 15 Teile organischen modifizierten Aminhärter, 3 bis 5 Teile Haftvermittler, 15 bis 50 Teile anorganischen Füllstoff, 3 bis 10 Teile Promoter, 0 bis 5 Teile Verdickungsmittel, 0 bis 5 Teile reaktive Verdünnungsmittel und 0,1 bis 2 Teile grüne organische Farbpaste umfasst, umfassend unter Zimmertemperatur und Atmosphärendruck Zugeben von 3 bis 5 Teilen Haftvermittler in eine gemischte Lösung von 5 bis 15 Teilen organischem modifiziertem Aminhärter, 0 bis 5 Teilen reaktiven Verdickungsmitteln und 3 bis 10 Teilen Promoter und Mischen zur Homogenität und anschließend Zugeben von 15 bis 50 Teilen anorganischem Füllstoff, 0 bis 5 Teilen Verdickungsmittel und 0,1 bis 2 Teilen grüner organischer Farbpaste und deren Rühren für 40 Minuten, sodass die Komponente B erhalten wird;
wobei die Komponente A und die Komponente B nach dem Mischen weiß werden.

## Revendications

1. Adhésif sec rouge et vert comprenant un composant A et un composant B, dans lequel le composant A qui est rouge comprend 20 à 30 parties de résine époxy, 0 à 3 parties d'agent de couplage, 1 à 5 parties de diluants réactifs, 20 à 60 parties de charge inorganique, 0,1 à 1 partie de pâte organique de couleur rouge, alors que le composant B qui est vert comprend 5 à 15 parties de durcisseur organique amine modifiée, 3 à 5 parties d'agent de couplage, 15 à 50 parties de charge inorganique, 3 à 10 parties de promoteur, 0 à 5 parties d'épaississant, 0 à 5 parties de diluants réactifs, et 0,1 à 2 parties de pâte organique de couleur verte, le composant A et le composant B devenant blancs après le mélange.

2. Adhésif sec rouge et vert selon la revendication 1, dans lequel la pâte organique de couleur rouge comprend un ou plusieurs de l'écarlate de Lithol, d'une poudre de pigment écarlate, du rouge de toluidine, et d'un rouge stable à la lumière, et un pigment vert utilisé dans la pâte organique de couleur verte est un mélange d'un ou plusieurs du jaune benzimidazolone azoïque, du jaune isoindolinone, du jaune de chrome médium, et du jaune d'aniline avec un ou plusieurs du bleu fluorescent et/ou du bleu de phtalocyanine.

3. Adhésif sec rouge et vert selon la revendication 1, dans lequel la résine époxy comprend un éther de glycidol de type bisphénol A, un éther de glycidol de type bisphénol F, un éther de propényle et de glycidol, un éther tert-butylique d'oxyde de propylène, un éther d'hexanediol et de glycidol, et un éther polyglycidylique.

4. Adhésif sec rouge et vert selon la revendication 1, dans lequel le durcisseur organique amine modifiée comprend un ou plusieurs d'un polyamide faiblement moléculaire, de phénalcamines, d'une amine aliphatique, d'une amine aliphatique cyclique, et d'une aminé aromatique.

5. Adhésif sec rouge et vert selon la revendication 1, dans lequel la charge inorganique comprend un ou plusieurs du carbonate de calcium, d'une poudre fine de silicium, du sulfate de baryum, de l'alumine, de la magnésie, du talc, du noir de carbone blanc, de la bentonite, et d'un pigment de titane.

6. Adhésif sec rouge et vert selon la revendication 1, dans lequel l'agent de couplage comprend un ou plusieurs du vinyl silane, du γ-propyltriméthoxysilane, de l'aminopropyltriéthoxysilane, et de l'anilinométhyltriéthoxysilane.

7. Adhésif sec rouge et vert selon la revendication 1, dans lequel le promoteur comprend un ou plusieurs du 2,4,6-tri(diméthylamino)phénol, de la N,N-diméthyl benzyl amine, de la N,N-diméthyl aniline et de la β-hydroxyéthyl diamine.

8. Adhésif sec rouge et vert selon la revendication 1, dans lequel l'épaississant est l'hydroxyéthyl cellulose.

9. Procédé de production d'un adhésif sec rouge et vert comprenant un composant rouge A et un composant vert B, comprenant :
un procédé de production du composant A qui comprend 20 à 30 parties de résine époxy, 0 à 3 parties d'agent de couplage, 1 à 5 parties de diluants réactifs, 20 à 60 parties de charge inorganique, 0,1 à 1 partie de pâte organique de couleur rouge, comprenant :
à température ambiante et pression atmosphérique, l'ajout de 0 à 3 parties d'agent de couplage dans une solution mélangée de 1 à 5 parties de diluants réactifs et leur mélange homogène ; puis le mélange homogène avec 20 à 30 parties de résine époxy à une vitesse de dispersion de 50 à 100 tours par minute ; l'ajout de 20 à 60 parties de charge inorganique, et de 0,1 à 1 partie de pâte organique de couleur rouge en séquence puis la dispersion pendant 40 minutes ; finalement, après le broyage avec trois rouleau, l'obtention du composant A rose; et
un procédé de production du composant B qui comprend 5 à 15 parties de durcisseur organique amine modifiée, 3 à 5 parties d'agent de couplage, 15 à 50 parties de charge inorganique, 3 à 10 parties de promoteur, 0 à 5 parties d'épaississant, 0 à 5 parties de diluants réactifs, et 0,1 à 2 parties de pâte organique de couleur verte, comprenant à température ambiante et pression atmosphérique, l'ajout de 3 à 5 parties d'agent de couplage dans une solution mixte de 5 à 15 parties de durcisseur organique amine modifiée, de 0 à 5 parties de diluants réactifs, et de 3 à 10 parties de promoteur puis le mélange homogène, puis l'ajout de 15 à 50 parties de charge inorganique, de 0 à 5 parties d'épaississant, et de 0,1 à 2 parties de pâte organique de couleur verte puis l'agitation pendant 40 minutes de telle sorte que le composant B soit obtenu ;
le composant A et le composant B devenant blancs après le mélange.
